Europäisches Patentamt

European Patent Office

Office européen des brevets

(11) Publication number: **0 444 733 A1**

# EUROPEAN PATENT APPLICATION

(21) Application number: **91200320.9**

(22) Date of filing: **15.02.91**

(51) Int. Cl.⁵: **B60J 7/06**

(30) Priority: **26.02.90 BE 9000214**

(43) Date of publication of application:
**04.09.91 Bulletin 91/36**

(84) Designated Contracting States:
**AT BE DE DK ES FR GB IT NL SE**

(71) Applicant: **RENDERS HOLDING N.V.**
**Industrieweg 4**
**B-2340 Beerse(BE)**

(72) Inventor: **Renders, Franciscus Augustinus**
**Antwerpsesteenweg 57**
**B-2340 Beerse(BE)**

(74) Representative: **Callewaert, Jean**
**Bureau Callewaert, Brusselse steenweg 108**
**B-3090 Overijse(BE)**

(54) **Girder for bodywork construction of industrial vehicles and so obtained bodywork frame.**

(57) Girder for bodywork construction of industrial vehicles, more specific upper longitudinal girder for trailer, semi-trailer or loading space of lorry, with roof canvas (23) and sidelong curtain (5), which girder mainly consists of an extruded element (3), which contains a longitudinal supporting core (7) and sidelong against the latter at least a guide (8) for the hanging of said curtain (5).

Fig.2.

The invention relates to a girder for bodywork construction for industrial vehicles, more particularly an upper longitudinal girder for trailer, semi-trailer or loading space of lorry with roof canvas and sidelong curtain.

The girders of this type used up till now consist of different parts which either by welding or by means of rivets, or by means of screws and/or bolts are fixed to each other.

Suchlike girders offer not only the disadvantage that their construction is very labour-intensive, such that their cost price is relatively high, but lead moreover to relatively heavy constructions which obviously forms an important disadvantage in the bodywork construction for industrial vehicles.

The invention has thence mainly as its aim to remedy these important disadvantages and to present a girder which can be made substantially entirely mechanically with a minimum of workers and moreover can absorb relatively high bending stress notwithstanding its compact and light design.

To this aim the girder comprises according to the invention an element extruded out of one piece, which contains a longitudinally supporting core and sidelong against the latter at least a guide for the hanging of said curtain.

Efficiently on the extruded element means have been provided for the slidable or not slidable mounting of a roof canvas.

In a preferred embodiment of the invention a second longitudinal guide has been provided at the longitudinal side of the supporting core, opposite of where the guide for the curtain is placed, for the slidable hanging of moveable struts.

The invention is further also relating to a bodywork frame for industrial vehicles with standing head partition and a standing back frame which at the top at their corners are mutually linked by longitudinal girders, according to the invention, and on which a roof canvas and a sidelong curtain should be mounted.

In a particular embodiment of this bodywork frame according to the invention, the longitudinal girders rest with their free ends on supports which are fixed at the to each other directed sides of the head partition and the back frame, at the height of their top corners, whereby a fixed link is formed between the longitudinal girders and the supports at the head partition and the longitudinal girders freely rest on the supports at the back frame, but are directly linked up to the latter by a detachable bolt.

Other details and advantages of the invention will become apparent in the hereafter following description of a specific embodiment of a universal girder according to the invention and of a bodywork frame in which use is made of this specific girder ; this description is only given as an example and does not limit the scope of the invention ; the hereafter used reference numbers are relating to the hereto attached figures.

Figure 1 is a schematic side-elevation, with partial section, of a part of a bodywork frame, in which use is made of a girder, according to a specific embodiment of the invention and applied in a bodywork frame with folding roof canvas.

Figure 2 is a representation of a cross section of the same part.

Figure 3 is also, on a larger scale, a perspective representation of a particular feature of the same embodiment.

Figure 4 is also a detailed representation, on larger scale, but in side-elevation of another feature of this same embodiment.

Figure 5 is a cross section, analogous to the one of figure 1, of the same girder but applied in a bodywork frame with fixed roof canvas.

In the different figures the same reference numbers are relating to the same or analogous elements.

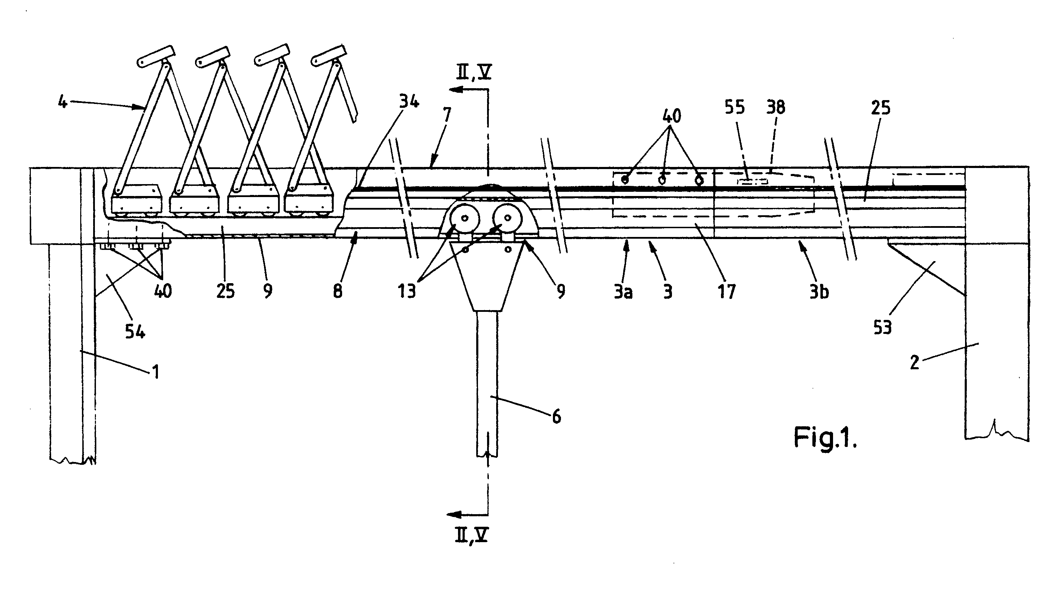

In figure 1 somewhat schematically a side-elevation is represented of the upper part of a bodywork frame of an industrial vehicle.

This frame is composed of a head partition 1, a standing back frame 2 parallel to the head partition and, at the height of the upper corners of the head partition 1 and the back frame 2, two horizontal longitudinal girders 3 which link the head partition 1 and the back frame 2 together.

In this specific embodiment of this bodywork frame on the two mutually parallel girders 3 is provided for a folding roof canvas 23.

In figure 1, for the clarity of the drawing, this roof canvas was not represented, but a part of the for itself known moveable folding mechanism 4 was, which in figure 1 was represented in folded condition and is mounted moveable on both girders 3.

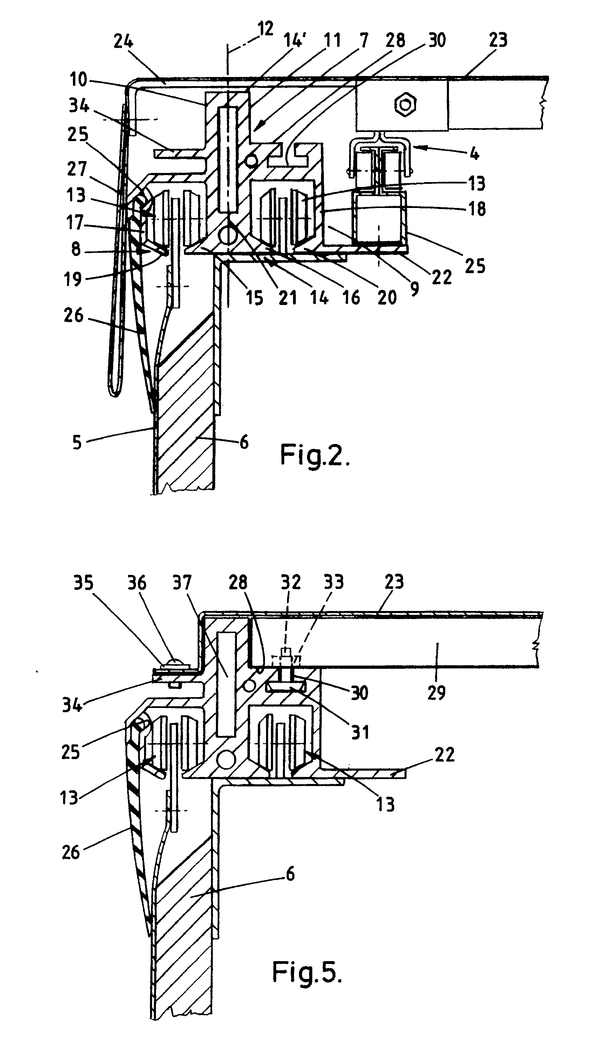

Next to this, also at each of the longitudinal girders 3 a curtain 5 (see figures 2 and 5) with moveable struts 5 is provided, in order to make a sidelong entrance to the loading space of the trailer, semi-trailer or lorry possible.

Since the use of curtains 5 with accompanying moveable struts 6 in the bodywork construction for industrial vehicles is known for itself, the description hereof is limited to a minimum.

The characteristic part of this bodywork frame is formed by the longitudinal girders and the way in which they are mounted between the head partition 1 and the back frame 2.

These characteristics form then the object of this invention.

The longitudinal girder 3 is made of an out of one piece extruded element made of registered element parts 3a and 3b, and they are preferably out of aluminium. Each element contains a longitudinal supporting core 7 and sidelong against the latter at least a guide 8 for the hanging of said curtain 5.

At the longitudinal side of the supporting core 7, accross from where said guide 8 is placed, a second longitudinal guide 9 is provided for the hanging of the moveable struts 6.

The supporting core 7 has substantially the form of a tube profile with a rectangular cross-section, while the guides 8 and 9 have been provided at each of the large longitudinal sides 10 and 11 of this profile, substantially symmetrical with respect to the vertical longitudinal symmetry plane 12 of this core. Further these guides 8 and 9 are substantially identical such that, both for the curtain 5 as for the struts 6, use can be made of identical guide rollers 13 for the curtain as well as for the struts.

Further the core 7 shows, at both sides of its basis, a sidelong broadening which is formed by two opposite standing rims 15 and 16. Here the rim 15 is part of the guide track for the curtain 5, while the rim 16 in an analogous manner is part of the guide track for the rollers 13 of the moveable struts 6.

The guides 8 and 9 show a substantially U-shaped cross-section, of which one of the legs converges with the standing longitudinal sides 10, respectively 11, of the tube-shaped core 7 and of which the other leg, respectively 17 and 18, extends at a certain distance parallel to these longitudinal sides and is provided at its free downward turned end with standing rims 19, respectively 20. These rims 19 and 20 extend at the height of the basis 14 and are turned toward the latter.

In this manner the standing rims 15 and 19 form the guide tracks for the rollers 13 of the curtain 5 and the standing rims 16 and 20 for the rollers 13 of the moveable struts 6.

In order to assure for a perfect guiding of the guide rollers 13, the pairs of standing rims 15 and 19, as well as 16 and 20, are executed at their upper side sloped to one another.

Further it is also important to note that the supporting core 7 shows, in the vicinity of its basis, next to the rims 15 and 16 an additional transverse consolidation 21, such that it has the possibility to absorb important bending forces without there being a considerable deformation of the girder.

For the mounting of a slidable or not slidable roof canvas on the girder 3 it shows thereto suitable means.

Thence at the outside of the guide 9, at the height of the standing rim 20 of the leg 18 of this guide a sidelong perpendicular on the side 11 of the tube-shaped core 7 protruding supporting rim or supporting wing 22 is provided onto which said folding mechanism 4 with the roof canvas 23 is mounted moveable. In order to make sure that the roof canvas 23 extends in closed position via a sidelong overhang 24 just over the girder the folding mechanism 4 rests on the supporting wing 22 through medium of a square tube profile 25 which for example by means of rivets is fixed on this supporting wing.

At the outside of the guide 8 a longitudinal groove is provided into which the upper edge of a rubber seal band 26 is slid and which extends downward to press against the top of the curtain 5.

The roof canvas 23 shows an into a loop folded hanging strip 27 which extends at the outside of the girder over the entire length of the latter until substantially at the height of the lower edge of the rubber seal band 26. By means of rivets the downward hanging strip 27 is fixed onto a downward bent free end of the overhang 24.

In order that the girder according to the invention also could be of use for the fixed attachment of a canvas roof (hence in contrast to a folding roof canvas) on top of the guide 9 for the moveable struts 6 a supporting surface is provided 28 on which transverse beams 29 can rest and be of use as support for the roof canvas.

As clearly becomes apparent in figure 5 in this supporting surface 28 a T-shaped groove 30 is left open over the entire length of the upper side of the guide 9, of which the dimensions are such that, from one of the free ends of this guide 9 the head 31 of a fastening bolt can be slid substantially fitting with the with screw thread provided bar 32 thereof directed upward and protruding with respect to this supporting surface 28.

By means of an on this bar 32 screwed nut 33 then each transverse beam 29 is fixed on the supporting surface 28.

Above the guide 9 for the roller blind 5 a perpendicular onto the side 10 of the core extended flange 34 is placed, onto which the longitudinal rim of the roof canvas 23 is fixed by means of a slat 35 and rivets 36.

The distance from the supporting surface 28 to the top 14' of the supporting core 7 is substantially the same to the height of on this supporting surface 28 to be placed transverse beams 29, such that the top of this core and of these transverse beams are placed substantially on a same plane, as is clearly illustrated in figure 5. The flange 34 is substantially on a same level with respect to the supporting surface 28.

Both this flange 34 and the guide 8 which are at one side of the supporting core 7 as the guide 9 with the thickening provided onto it for the formation of the supporting surface 28 in which the T-shaped groove 30 has been left open, contribute to the sturdiness of this core, in particular against sidelong kinking. This has among other things as a result that a narrower core can be employed than the equivalent tube profile which is used with existing girders for the same purpose.

In certain cases anyhow it is possible for example to improve even further the resistance against sagging by sliding in the cavity 37 of the core a fitting not represented fortification slat which for example on different spots can be fixed by means of rivets in this core.

As was represented in figure 1 the girder can exist according to the invention out of two or more registered attached to one another, extruded element parts 3a and 3b with the same crosscut.

The mutual attachments of these element parts 3a and 3b occur by means of a connecting strip 38 which is slid partly in the cavity 37 of element part 3a and partly in the analogous cavity of the element 3b.

By means of a bolting system, in particular a zip-fastener, then both element parts are fastened in a detachable manner in registered fashion against one another.

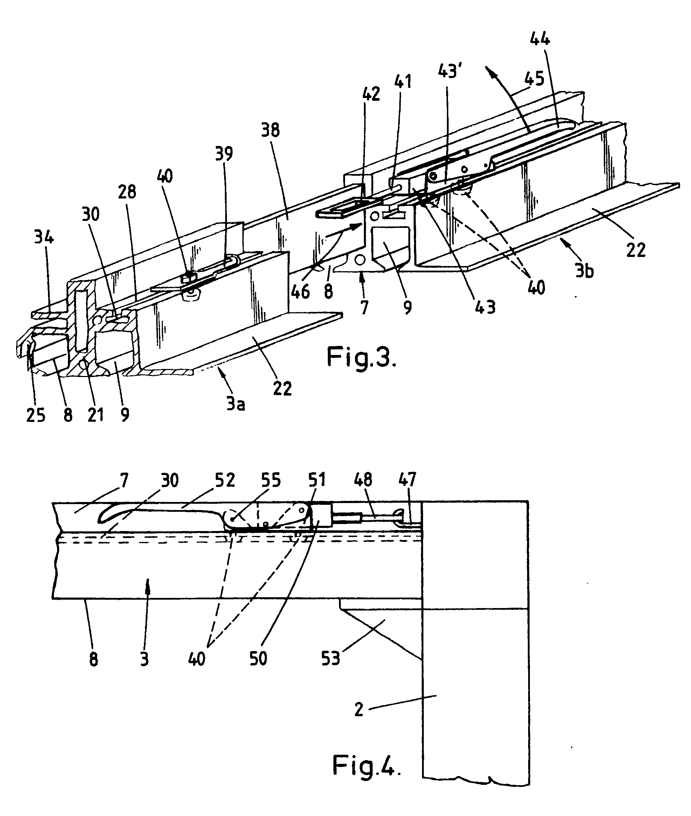

In the represented embodiment this zip-fastener consists, on the one hand, of a hook 39 which by means of a bolt 40 is fixed on an adjustable spot in the groove 30 of the supporting surface 20 and, on the other hand, of a pulling rod 41 with in the toward the hook 39 directed broadened flat end an eye 41 in which the hook 39 can catch. This pulling rod 41 is fixed on a sliding block 43, which by means of a lever 44 can undergo a movement according to the longitudinal direction of the element 3b in an also in the groove 30 by means of bolts 40 fixed slide bearer 43'. For the tightening of the two element parts 3a and 3b against one another the pulling rod 41 is brought at first in its most protruding position by having the lever 44 undergo a rotation in the direction of arrow 45 and the hook 39 is brought in the eye 42 of this pulling rod 41. Next then the lever 44 is pressed downward to the in figure 3 represented posistion, such that the rod 41 has to undergo a movement in the direction of arrow 46 and thus tightens the two elements 3a and 3b against each other. By means of a bolting pen 55 it is then taken care of that the lever 44 remains in the in figure 3 represented position.

A more or less analogous zip-fastener is also provided between the back frame 2 and the free end of the against the latter linked up element 3, as in detail represented in figure 4. This zip-fastener includes thus also a hook 47 and a pulling rod 48 with in the free end of this an eye 49 in which the hook 47 catches. This pulling rod 48 is further mounted on a sliding block 50 which is mounted slidable in a slide bearer 51, which is fixed by means of bolts 40 in the groove 30 of the supporting surface 28, on an adjustable spot. In the same manner as is the case for the zip-fastener between two elements 3a and 3b the tightening of the zip-fastener occurs by means of a lever 52.

This then against the back frame 2 tightened end of the girder 3 rests freely on a support 53 which is fixed against the frame 2.

As represented in figure 1 the opposite lying end of the girder is fixed by means of bolts 40 on an analogous support 54 which is fixed against the head partition 1.

In this manner one thus obtains a bodywork frame which is very easily disassembled for example to replace in a simple manner a damaged girder or element thereof.

Further it is such that because of the fact that for example not one sidelong welding spot exists between the guides 8 and 9 and the core 7, both the curtain and the moveable struts can be moved in their respective guides without risk of jamming.

Because of the fact that the girder 3 can be formed of separate against one another placed parts, use can be made for example of girders with standardised length which then depending on the length of the to be built bodywork frame can be fixed in registered fashion.

The out of one piece manufacturing of the girder allows for obtaining a maximum of material saving and this without deteriorating the bending resistance of the girder. Furthermore because of the substantially symmetrical embodiment of it with respect to the symmetry plane of the supporting core the tension in the girder is substantially equally distributed and for example concentrations of tensions are avoided.

The invention is of course in no way limited to the above described and in the figures represented embodiment which is fit both for fixed roof canvases as for folding roof canvases, but several changes can be considered among others concerning form and dimensions of the component parts of it.

Thus, when no use has to be made of moveable struts, for example with smaller spannings, the guide 9 can be omitted and, when the roof is thus folding the supporting wing for the folding mechanism can link up directly to the supporting core of the girder.

Further, for a girder which is only destined for fixed roofs this supporting wing can be omitted.

Although preference is given to an aluminium girder in principle it can consist of an arbitrary extrudable material as long as thus the desired carrying capacity and bending resistance are obtained.

In a variant of the in the figures represented embodiment the basis 14 of the supporting core 7 can be open, such that the latter thus, has a U-shaped crosscut of which in the same manner as of the guides 8 and 9 the legs are directed downward. This thus weaker construction can more or less be compensated by making use of an iron bar with rectangular crosscut, of which the free ends are fixed with respect to the head partition 1 and the back frame 2, such that the core 7 of the extruded element 3 or of the different registered parts 3a, 3b thereof are placed astride and fitting on this bar and for example are fastened by means of rivets.

**Claims**

1. Girder for bodywork construction of industrial vehicles, more specific upper longitudinal girder for trailer, semi-trailer or loading space of lorry, with roof canvas (23) and sidelong curtain (5), characterized in that it mainly consists of an extruded element (3), which contains a longitudinal supporting core (7) and sidelong against the latter at least a guide (8) for the hanging of said curtain (5).

2. Girder according to claim 1, characterized in that on the extruded element (3) means (22, 25, 28, 30) are provided for the slidable or not slidable mounting of a roof canvas (23).

3. Girder according to claim 2, characterized in that said means are provided with at the longitudinal side (11) of the supporting core (7) opposite of where said guide (8) is, a sidelong protruding supporting rim or supporting wing (22) onto which according to the longitudinal direction of the girder, a folding mechanism (4) is mounted moveable with the roof canvas (23).

4. Girder according to either claim 2 or 3, characterized in that said means at the longitudinal side (11) of the supporting core (7) opposite from where said guide (8) is, are provided with a with respect to the supporting core (7) protruding support (28) in the upper side of which a towards the top narrowing groove (30) has been let open of which the form and dimensions are such that from one of the free ends of the support (28) the head (31) of a mounting bolt can be slid substantially fitting in this groove (30) with the with screw thread provided bar (32) thereof directed upward and protruding with respect to the upper side of the support (28) and on the latter resting transverse beams (29), onto which the canvas (23) is fixed, can be fastened by means of an on this bar (32) screwed nut (33) on the support (28).

5. Girder according to claim 4, characterized in that at the longitudinal side of the supporting core (7) where said guide (8) is, above the latter, a sidelong protruding flange (34) is provided, onto which the longitudinal rim of the roof canvas (23) can be fixed.

6. Girder according to any one of claims 1 to 5, characterized in that at the outside of the guide (8) for the curtain (5) , substantially over its entire length a groove (25) is provided, in which the upper rim of a seal band (26) can be slid.

7. Girder according to any one of claims 1 to 6, characterized in that at the longitudinal side of the supporting core (7), opposite from where the guide (8) for the curtain (5) is placed, a second longitudinal guide (9) is provided for the slidable hanging of moveable struts (6).

8. Girder according to claim 7, characterized in that the supporting core (7) shows a vertical longitudinal symmetry plane (12) and both said guides (8) and (9) ar lying substantially symmetrical with respect to this plane.

9. Girder according to claim 8, characterized in that both guides (8) and (9) are substantially identical.

10. Girder according to any one of claims 7 to 9, characterized in that said support (28) is provided above the second guide (9) and with the latter forms one part.

11. Girder according to any one of claims 7 to 10, characterized in that said supporting rim or supporting wing (22) is provided on the outmost longitudinal side (18) of the second guide (9).

12. Girder according to claim 11, characterized in that the supporting rim or supporting wing (22) extends substantially at the height of the basis (14) of the supporting core (7).

13. Girder according to any one of claims 1 to 12, characterized in that the supporting core (7) substantially has the shape of a tube profile with a substantially rectangular crosscut and the guide (8) for said curtain (5) is provided at one of the larger longitudinal sides (10) of this profile.

14. Girder according to claim 13, characterized in that the basis (14) of the supporting core (7) which is provided along one of the narrow longitudinal sides, shows a sidelong broadening which is formed by two opposing standing rims (15) and (16), whereby one of these rims (15) is part of the guide (8) for the curtain (5) and the other rim (16) is part of the guide (9) for the slidable struts (6).

15. Girder according to claim 14, characterized in that said guides (8) and (9) show a substantially Y-shaped crosscut, of which one of the legs is part of one of the large longitudinal sides, respectively (10) and (11), of the core (7), whereby the free ends of these legs are provided with directed to one another standing rims, respectively (19) and (20), substantially at the height of the basis (14) of the core (7).

16. Girder according to any one of claims 13 to 15, characterized in that the basis (14) of the core shows an internal fortification (21).

17. Girder according to any one of claims 4 to 16, characterized in that the distance from said support (28) to the top (14) of the core (7), opposite from where said support (28) is provided, extends substantially at the same level as the latter.

18. Girder according to any one of claims 5 to 17, characterized in that said flange (34) on the longitudinal side (16) of the core (7), opposite from where said support (28) is provided, is extended substantially on the same level as the latter.

19. Girder according to any one of claims 1 to 18, characterized in that it consists of at least two registered to be fixed to one another extruded element parts (3a) and (3b) with substantially the same crosscut and with a supporting core (7), of which at least one of the ends is hollow, whereby a connecting strip (38) is provided, which can be slid partly in the cavity (37) of an end of one of these element parts (3a) and partly in the cavity at the end of the other element part (3b), which should be placed opposite the first mentioned end, substantially fitting, such that both element parts (3a) and (3b) can be assembled in registered fashion, whereby bolting means, like a zip-fastener (39 to 44), are provided to attach both element parts (3a) and (3b) in a detachable fashion in registered fashion.

20. Bodywork frame for industrial vehicles, such as for semi-trailers, trailers, loading spaces of lorries, with a standing head partition (1) and a standing back frame (2) , which are linked up at the top of their corners mutually by transverse girders (3) and onto which a roof canvas (23) and a sidelong curtain (5) should be mounted, characterized in that said longitudinal girders consist of extruded elements (3) as defined in one of the previous claims.

21. Bodywork frame according to claim 20, characterized in that the extruded elements (3) rest with their free end on supports (53) and (54) which are fixed on the toward one another directed sides of the head partition (1) and the back frame (2), at the height of their top corners, whereby a fixed link is formed between elements (3) and the supports (54) at the head partition and the elements (3) rest free on the supports (53) at the back frame (2), but are linked up directly to the latter by means of a detachable bolt (47) to (52).

Fig.1.

EP 0 444 733 A1

Fig.2.

Fig.5.

8

Fig.3.

Fig.4.

European
Patent Office

**EUROPEAN SEARCH
REPORT**

Application Number

**EP 91 20 0320**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | DE-C-3 541 812 (SCHMITZ)<br>* the whole document * | 1,20,3,6,<br>7,8,15 | B 60 J 7/06 |
| Y | DE-A-3 137 437 (SCHARWÄCHTER)<br>* page 6, lines 31- - 36; figure 2 * | 1,20 | |
| A | DE-A-2 535 131 (SCHARWÄCHTER)<br>* the whole document * | 1,3,19 | |

TECHNICAL FIELDS
SEARCHED (Int. Cl.5)

B 60 J
B 60 P

The present search report has been drawn up for all claims

| Place of search | Date of completion of search | Examiner |
|---|---|---|
| The Hague | 05 June 91 | FOGLIA A. |